# EUROPEAN PATENT SPECIFICATION

(11) **EP 2 023 338 B1**
(45) Date of publication and mention of the grant of the patent: **28.05.2014**
(21) Application number: 08161276.4
(22) Date of filing: 28.07.2008
(51) Int. Cl.: G10L 15/26

(54) **Data attribute detection method and system and data attribute analysis device**
Datenattribut-Detektionsverfahren und -system und Datenattribut-Analysevorrichtung
Procédé de détection d'attribut de données et système et dispositif d'analyse d'attribut de données

(30) Priority: 30.07.2007 CN 200710130070; 22.05.2008 WO PCT/CN2008/071048
(43) Date of publication of application: 11.02.2009
(73) Proprietor: Huawei Technologies Co., Ltd., Longgang District, Shenzhen Guangdong 518129 (CN)
(72) Inventor: Yu, Zhou, Huawei Administration Building,, Shenzhen Guangdong 518129 (CN); Meng, Yuetao, Huawei Administration Building, Bantian, Shenzhen Guangdong518129 (CN); Xu, Ji, Huawei Administration Building, Bantian, Shenzhen Guangdong 518129 (CN)
(74) Representative: Isarpatent

(56) References cited:
- US-A1- 2004 260 560
- RUNSHENG WANG ET AL: "VoIP Development in China" COMPUTER, IEEE SERVICE CENTER, LOS ALAMITOS, CA, US, vol. 37, no. 9, 1 September 2004 (2004-09-01), pages 30-37, XP011118740 ISSN: 0018-9162

## Description

### Field of the Invention

The present invention relates to the field of communication and in particular to a data attribute detection method and system and a data attribute analysis device.

### Background of the Invention

Security of some important data information is critical to the survival and development of an enterprise, and therefore it is necessary to take measures to reduce security risks of the data information.

Prior to the birth of the Voice over IP (VoIP) technology, a non-voice data file could be transmitted over a voice channel. For example during a facsimile, a sender modulates a non-voice data file of a user into an analog signal transmitted by a modem to a telephone line for transmission, and a modem of a receiver upon reception of the analog signal demodulates the signal into a digital signal and transmits the signal to a fax machine. The fax machine recombines the received digital signal into a non-voice data file and provides the file to a user. Obviously, prior to the birth of the VoIP technology, devices of a telephone line, a modem or a fax machine, etc. are needed in transmitting the non-voice data file over a voice channel, and therefore a better management of these devices might result in an increased management effort although the better management of these devices can reduce to some extent risks in transmitting the non-voice data file containing important data information to the outside over a voice channel.

After the birth of the VoIP technology, the transmission of a non-voice data file over a voice channel has been made more convenient. For example, a data information file can be packed by a PC into packets with a voice data attribute, which are transmitted to an opposite party over a voice channel established by using an IP telephone, especially a soft telephone which is installable on the PC. However, the transmission of a non-voice data file containing important data information can not be controlled with this convenience, which may endanger the security of the important data information.

US 2004/260560 A1 discloses a VoIP security intelligence method through detecting voice data and identifying the voice data as significance or importance. RUNSHENG WANG ET AL: "VoIP Development in China" (COMPUTER IEEE SERVICE CENTER, LOS ALAMITOS, CA, US, vol. 37, no.9, 1 September 2004 (2004-09-01), pages 30-37, XP011118740 ISSN:00189162**) provides a method of differentiating voice and fax traffic automatically through differentiating encoding standards.**

### Summary of the Invention

Embodiments of the invention provide a data attribute detection method and system and a data attribute analysis device to improve the security of important data information.

To attain this, an embodiment of the invention provides a data attribute detection method including: obtaining a media stream transmitted over a voice channel established through a voice switch; recognizing the obtained media stream to obtain a recognition result; and determining whether the recognition result is above a preset recognition success threshold; if the recognition result is above a preset recognition success threshold, determining that the data attribute of the media stream transmitted over the voice channel is voice data; otherwise, determining that the data attribute of the media stream transmitted over the voice channel is non-voice data; if the data attribute of the media stream is non-voice data, determining a corresponding control mode for a communication process of transmitting the media stream with the data attribute of non-voice data in accordance with preconfigured policy information; if the determined control mode is a disturbance control mode, instructing the voice switch to perform a disturbance control on the current communication process according to the disturbance control mode, so that the voice switch transmits a corresponding instruction to a media server to instruct the media server to add trashy data, which is noise or the like, in currently transmitted media stream and transmit the media stream with the trashy data to receiver, wherein all media streams exchanged between both communication parties are forwarded via the media server.

An embodiment of the invention further provides a data attribute detection system including: a recognition server, a data attribute analysis device and a voice switch; the recognition server is adapted to obtain a media stream transmitted over a voice channel established through the voice switch, to recognize the obtained media stream to obtain a recognition result; and the data attribute analysis device is adapted to determine whether the recognition result is above a preset recognition success threshold; if the recognition result is above a preset recognition success threshold, determining that the data attribute of the media stream transmitted over the voice channel is voice data; otherwise, determining that the data attribute of the media stream transmitted over the voice channel is non-voice data; if the data attribute of the media stream is non-voice data, is further adapted to determine a corresponding control mode for a communication process of transmitting the media stream with the data attribute of non-voice data in accordance with preconfigured policy information, and if the determined control mode is a disturbance control mode, is further adapted to instruct the voice switch to perform a disturbance control on the current communication process according to the disturbance control mode; the voice switch is adapted to establish the voice channel, and is further adapted to transmit a corresponding instruction to a media server according to instruction of the data attribute analysis device to instruct the media server to add trashy data, which is noise or the like, in currently transmitted media stream and transmit the media stream with the trashy data to receiver, wherein all media streams exchanged between both communication parties are forwarded via the media server.

An embodiment of the invention further provides a data attribute analysis device including: an obtaining unit adapted to obtain a recognition result of a media stream transmitted over a voice channel established through a voice switch; and a detection unit comprising a comparison sub-unit and a detection sub-unit, wherein, the sub-unit adapted to compare the recognition result with a preset recognition success threshold; and the detection sub-unit adapted to determine that the data attribute of the media stream transmitted over the voice channel is voice data when a comparison result is that the recognition result is above the preset recognition success threshold, or to determine that the data attribute of the media stream currently transmitted over the voice channel is non-voice data when a comparison result is that the recognition result is below or equal to the preset recognition success threshold; a control mode determination unit adapted to determine a corresponding control mode for a communication process of transmitting the media stream with the data attribute of non-voice data in accordance with preconfigured policy information if the data attribute of the media stream is non-voice data; and, if the determined control mode is a disturbance control mode, instruct the voice switch to perform a disturbance control on the current communication process according to the disturbance control mode, so that the voice switch transmits a corresponding instruction to a media server to instruct the media server to add trashy data, which is noise or the like, in currently transmitted media stream and transmit the media stream with the trashy data to receiver, wherein the media server is used to forward media streams exchanged between both communication parties.

As apparent from the above solutions, the embodiments of the invention can obtain a recognition result of a media stream transmitted over a voice channel and determine a data attribute of the media stream transmitted over the voice channel in accordance with the recognition result. Therefore, the embodiments of the invention can detect whether a media stream transmitted over a voice channel is non-voice data, and particularly can prevent the non-voice data from being transmitted to the outside over the voice channel, thereby improving the security of important data information.

### Brief Description of the Drawings

Fig.1 illustrates a structural diagram of a first embodiment of the invention;

Fig.2 illustrates a flow chart of a second embodiment of the invention; and

Fig.3 illustrates a structural diagram of a third embodiment of the invention.

### Detailed Description of the Invention

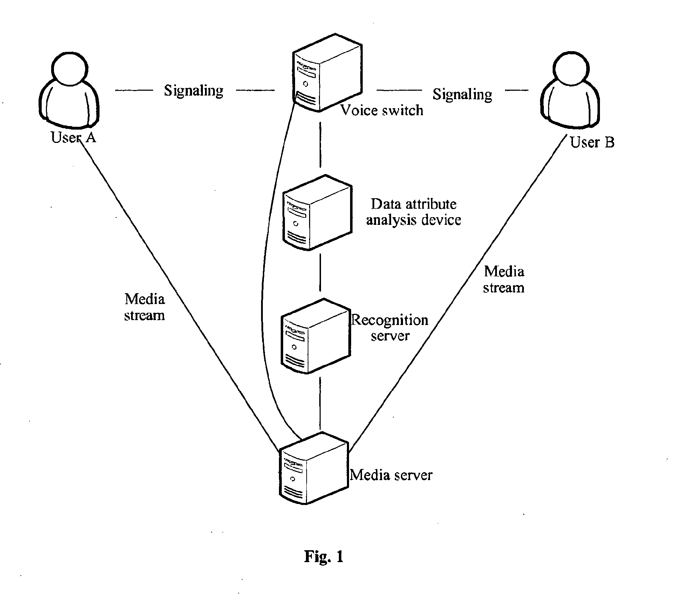

A first embodiment of the invention provides a data attribute detection system as structured in Fig.1, which includes a voice switch, a media server, a recognition server and a data attribute analysis device.

Particularly, the voice switch accomplishes a complete call process between communication parties (e.g., a user A and a user B in Fig.1). In this call process, both communication parties negotiate about media stream information, including information of a coding mode, a compression mode, and number of a communication port, etc., to be used, and media communication connection channels between both communication parties and the media server in the system are established.

The media server forwards a media stream exchanged between both communication parties and buffers a certain number of media streams.

The recognition server performs voice recognition for a media stream in the media server and obtains a corresponding recognition result (taking a voice recognition result as an example in the embodiments of the invention here and below), for example, the number of voice words contained in the media stream transmitted within unit time or the number of successfully recognizable data packets contained in the media stream transmitted within unit time or the percentage of the number of successfully recognizable data packets contained in the media stream transmitted within unit time relative to the total number of data packets contained in the media stream, etc., and transmits the recognition result to the data attribute analysis device.

The data attribute analysis device determines whether the data attribute of the currently communicated media stream is voice or non-voice data in accordance with the voice recognition result and a preset recognition success threshold in a way that the received voice recognition result transmitted from the recognition server is compared with the preset voice recognition success threshold; and if the comparison result exceeds (or is greater than) the preset recognition success threshold, the data attribute of the currently communicated media stream is determined as voice data; otherwise the data attribute of the currently communicated media stream is determined as non-voice data.

When the data attribute of the currently communicated media stream is determined as voice data, it is determined that the media stream will not be processed; and when the data attribute of the currently communicated media stream is determined as non-voice data, a control mode for the current communication is determined in accordance with policy information preconfigured for different communication processes, and the control mode may include but not limited to an interruption control mode in which the current communication process is interrupted, a disturbance control mode in which the current communication process is disturbed, for example, by adding trashy data such as noise or the like in the currently transmitted media stream to make it difficult for a receiver to recover the original initial data, an alarm control mode, etc.

If the control mode for the current communication is determined as the interruption control mode, the data attribute analysis device notifies the voice switch about the interruption control mode. The voice switch performs an interruption control on the current communication in accordance with the control interruption mode. In other words, the voice switch interrupts the media communication connection channel between both communication parties in accordance with the received notification.

If the control mode for the current communication is determined as the disturbance control mode, the data attribute analysis device notifies the voice switch of the disturbance control mode. The voice switch performs a disturbance control on the current communication in accordance with the disturbance control mode. In other words, the voice switch transmits a corresponding instruction to the media server in accordance with the disturbance control mode, and the media server adds trashy data such as noise or the like in the currently transmitted media stream and transmits the media stream to the receiver in accordance with the received instruction from the voice switch.

If the control mode for the current communication is determined as the alarm control mode, the data attribute analysis device can directly generate an alarm signal to notify a network administrator or can notify the voice switch in accordance with the alarm control mode, and the voice switch can generate an alarm signal to notify the network administrator in accordance with the received notification.

The data attribute analysis device can be physically separate or arranged on another device, e.g., a voice switch.

The recognition server can be physically separate or arranged on another device, e.g., a media server or a voice switch.

The above descriptions have been given taking voice recognition of a media stream in the media server by the recognition server as an example. Additionally, the recognition server can also recognize a media stream in the media server by a human voice detection method. For example, a spectrum model method is employed, a spectrum profile of a media stream is compared with a general human voice spectrum profile; and if the error of the spectrum profile is within an allowable range, the data attribute of the media stream can be determined as voice data, and if the error of the spectrum profile is beyond the range, the data attribute of the media stream can be determined as non-voice data. Obviously, the data attribute of the transmitted media stream can be determined as voice or non-voice data in accordance with an obtained human voice detection result. Thereafter, the human voice detection result is taken as a recognition result of the recognition server, which is transmitted to the data attribute analysis device, and the data attribute analysis device can determine whether the data attribute of the media stream currently transmitted over a voice channel is voice or non-voice data in accordance with the recognition result of the recognition server.

Alternatively, only the recognition server and the data attribute analysis device are provided in the above embodiment. The recognition server is adapted to obtain and recognize a media stream transmitted over the voice channel and to obtain a recognition result, and the recognition server can acquire a media stream transmitted over the voice channel through an acquisition device or can obtain a media stream transmitted over the voice channel by taking other methods.

The data attribute analysis device is adapted to determine the data attribute of the media stream transmitted over the voice channel in accordance with a recognition result of the recognition server. Processing details thereof are analogous to those in the related descriptions in the above embodiment and will not be repeated here.

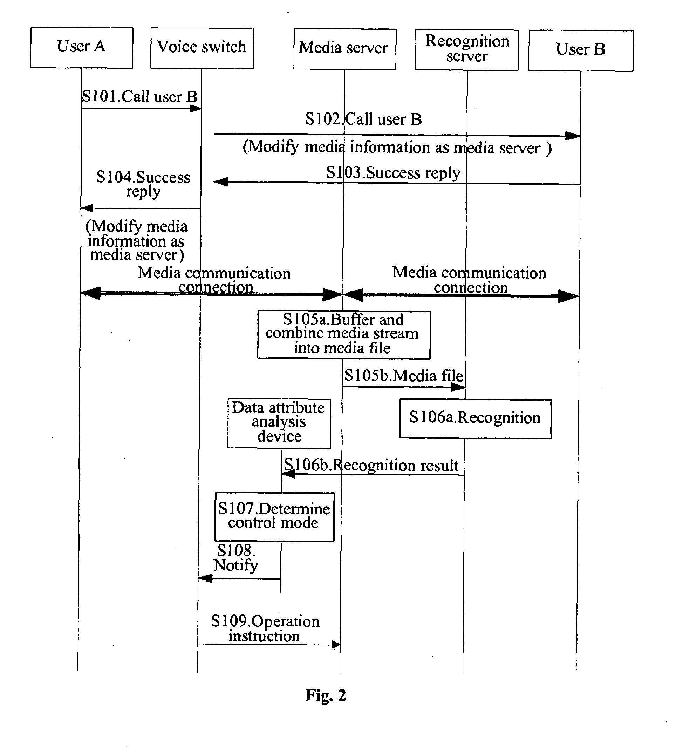

The second embodiment of the invention relates to a data attribute detection method in which a user A calls a user B, and a media communication connection channel between the users and a media server, i.e., a voice channel, is established through voice switches serving the users. In a communication process through the media communication connection channel, a media stream currently transmitted over the voice channel is obtained and voice recognition of the media stream is performed to obtain a corresponding voice recognition result. The voice recognition result is compared with a preset recognition success threshold to detect the data attribute of the media stream transmitted over the voice channel, and if the voice recognition result is below or equal to the preset recognition success threshold, the data attribute of the media stream is non-voice data, and the communication process of transmitting the media stream with the data attribute of non-voice data is controlled in accordance with policy information preconfigured for different communication processes, that is, firstly a corresponding control mode is determined for the communication process of the media stream of non-voice data, and then the communication process of the current media stream of non-voice data is controlled in accordance with the determined corresponding control mode. A specific implementation flow as illustrated in Fig.2 includes:

In the step S101, the user A initiates a request of calling the user B to the voice switch currently serving him. The request carries media description information of the user A, including information on a coding mode and a compression mode supported by the user A, a number of a communication port of the user A, etc.

In the step S 102, upon reception of the request, the voice switch currently serving the user A modifies the media description information of the user A to media description information of the media server and forwards the request to the user B.

In the step S103, upon reception of the request, the user B generates a success reply and transmits the success reply to the voice switch currently serving him.

In the step S104, upon reception of the success reply, the voice switch currently serving the user B modifies media description information of the user B to the media description information of the media server and then forwards the success reply to the user A. The media description information includes information of a coding mode, a compression mode and/or a number of a communication port, which can be available, etc.

After the above steps, both call parties finish the negotiation about the media information, including the information of a coding mode, a compression mode and/or a number of a communication port, which can be available, etc.; and establish a media communication connection channel, i.e., a voice channel used for the media communication, respectively with the media server. Then all media streams exchanged between both call parties are forwarded via the media server in the communication process of the user A and the user B, details are as followed.

In the steps S105a and S105b, media streams exchanged between both communication parties in the communication process reach the media server, and the media server buffers a certain number of media streams and then transmits these media streams to a recognition server.

In the steps S106a and S106b, the recognition server recognizes the obtained media stream, obtains a corresponding recognition result and transmits the recognition result to a data attribute analysis device.

The recognition result is a voice recognition result which is obtained from voice recognition of the media stream by the recognition server using a voice recognition method, typically the number of voice words contained in the media stream transmitted within unit time or the number of successfully recognizable data packets contained in the media stream transmitted within unit time or the percentage of the number of successfully recognizable data packets contained in the media stream transmitted within unit time relative to the total number of data packets contained in the media stream, etc.

The voice recognition method used by the recognition server may be an existing voice recognition technology, for example, an acoustic feature analysis in which a segment of the voice media stream transmitted within unit time is divided into syllables (a syllable, i.e., a segment of consecutive data packets, is typically successfully recognizable) according to an acoustic feature, and in the process of division into syllables, a transition voice segment between syllables will be discarded (the transition voice segment, also a segment of consecutive data packets, is typically unrecognizable), so that a recognition result is obtained as data packets occupied by successfully recognizable syllables contained in the media stream transmitted within a unit time and the percentage of data packets occupied by successfully recognizable syllables contained in the media stream transmitted within a unit time relative to the total number of data packets.

A match is conduct according to an acoustic model after the acoustic feature analysis is finished, that is, the successfully recognized syllables are associated with words. Typically, a match of a syllable and a word can be marked in a voice recognition process and will be accepted if the mark is above a threshold, otherwise the recognition is disabled, and thus the second recognition result can be obtained as successfully recognized voice words contained in the media stream transmitted within unit time.

The above successfully recognized voice words are corrected by a linguistic model, and a corresponding recognition result can be obtained as the number of successfully recognizable voice words contained in the media stream transmitted within unit time.

The recognition server transmits the above voice recognition results or one of the voice recognition results to a data attribute analysis device.

In the step S107, the data attribute analysis device receives the voice recognition result and determines the data attribute of the media stream currently transmitted over the voice channel in accordance with the voice recognition result and a preset recognition success threshold; and if the data attribute of the currently communicated media stream is voice data, the data attribute analysis device performs no processing, and if the data attribute of the currently communicated media stream is non-voice data, the communication process of transmitting the media stream with the data attribute of non-voice data is controlled in accordance with policy information preconfigured for different communication processes, that is, firstly a control mode for the communication process of the media stream of non-voice data is determined, and the communication process of the current media stream of non-voice data is controlled in the determined corresponding control mode. For example, the step S108 is executed to notify a voice switch of the control mode, and the voice switch issues a corresponding instruction to a media server according to the notification (i.e. step 109).

The voice switch performs processing according to the received determined control mode or performs corresponding processing by itself according to the determined control mode (in this embodiment, as an example, the voice switch is instructed to perform corresponding processing according to the determined control mode.).

In the step S107, the preset recognition success threshold can be preconfigured in the data attribute analysis device or in configuration information of a system where the data attribute analysis device is located. The preset recognition success threshold can be the number of voice words contained in the media stream transmitted within unit time or the number of successfully recognizable data packets contained in the media stream transmitted within unit time or the percentage of the number of successfully recognizable data packets contained in the media stream transmitted within unit time relative to the total number of data packets contained in the media stream, etc. The data attribute analysis device can compare the voice recognition result with the preset recognition success threshold while determining the data attribute of the media stream currently transmitted over the voice channel in accordance with the voice recognition result and the preset recognition success threshold; and if a comparison result is that the voice recognition result is below or equal to the preset recognition success threshold, then the data attribute of the media stream currently transmitted over the voice channel is determined as non-voice data, otherwise the data attribute of the media stream currently transmitted over the voice channel is determined as voice data.

For example, a preset first recognition success threshold assumed to be 70% is compared with a voice recognition result for successful recognition, for example, the percentage of the number of successfully recognizable data packets contained in the media stream transmitted within unit time relative to the total number of data packets contained in the media stream, and if the percentage exceeds (or is above) 70%, then the data attribute of the media stream transmitted within unit time is determined as voice data.

If 70% is not exceeded, then a further determination is made to compare the next index, i.e., the number of successfully recognizable voice words contained in the media stream transmitted within unit time, with a corresponding preset second recognition success threshold; and if the number exceeds (or be above) the preset second recognition success threshold, then the data attribute of the media stream transmitted within unit time is determined as voice data, otherwise the data attribute of the media stream transmitted within unit time is determined as non-voice data.

In the step S107, the communication process of transmitting the media stream with the data attribute of non-voice data is controlled in accordance with preconfigured policy information, that is, firstly a control mode for the communication process of the currently transmitted media stream with the data attribute of non-voice data is determined, and the control mode may be an interruption control mode in which the current communication process is interrupted, a disturbance control mode in which the current communication process is disturbed, for example, by adding trashy data such as noise or the like in the currently transmitted media stream to make it difficult for a receiver to recover the original initial data, an alarm control mode, etc.

If the determined control mode is the interruption control mode, then the data attribute analysis device instructs the voice switch to perform an interruption control on the current communication process according to the interruption control mode, and the voice switch interrupts the media communication connection between both communication parties according to the instruction.

If the determined control mode is the disturbance control mode, then the data attribute analysis device instructs the voice switch to perform a disturbance control on the current communication process according to the disturbance control mode, and the voice switch transmits a corresponding instruction to the media server according to the instruction. The media server adds trashy data such as noise or the like in the currently transmitted media stream and transmits the media stream to the receiver according to the instruction from the voice switch.

If the determined control mode is the alarm control mode, the data attribute analysis device may notify the voice switch according to the alarm control mode, and the voice switch may generate an alarm signal to notify a network administrator according to the notification from the data attribute analysis device. Alternatively, the data attribute analysis device may perform corresponding processing by itself according to the determined control mode, that is, directly generate an alarm signal to notify the network administrator.

The above descriptions of the second embodiment have been given taking voice recognition of a media stream in the media server by the recognition server as an example. Additionally, the recognition server may also recognize a media stream by a currently existing human voice detection method. For example, a spectrum model method is employed, a spectrum profile of a media stream is compared with a general human voice spectrum profile; and if an error of the spectrum profile is within an allowable range, the data attribute of the media stream may be determined as voice data, and if the error of the spectrum profile is beyond the range, the data attribute of the media stream may be determined as non-voice data. Obviously, a finally obtained human voice detection result contains information about whether the detected media stream is voice or non-voice data, and the recognition server transmits the human voice detection result as a recognition result to the data attribute analysis device. Thus, the data attribute analysis device can determine whether the data attribute of the media stream currently transmitted over the voice channel is voice or non-voice data directly in accordance with the human voice detection result.

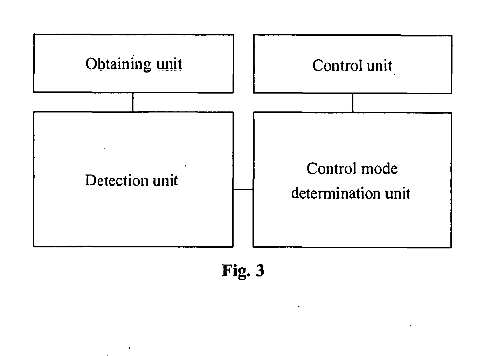

The third embodiment of the invention provides a data attribute analysis device as structured in Fig.3, which includes an obtaining unit and a detection unit, the detection unit can further include a comparison sub-unit and a detection sub-unit. For further control a current communication, the data attribute analysis device can further include a control mode determination unit and a control unit. The control unit can further include a first control sub-unit and/or a second control sub-unit.

The obtaining unit is adapted to obtain a recognition result of a media stream transmitted over a voice channel. Particularly, the obtaining unit can obtain a voice recognition result from a recognition server.

The detection unit is adapted to determine the data attribute of the media stream transmitted over the voice channel in accordance with the recognition result. Particularly, the detection unit includes:

The comparison sub-unit compares the voice recognition result obtained by the obtaining unit with a preset recognition success threshold which can be preconfigured in the data attribute analysis device or in configuration information of a system where the data attribute analysis device is located, and then transmits a comparison result to the detection sub-unit.

The detection sub-unit determines that the data attribute of the media stream transmitted over the voice channel is voice data when the comparison result is that the voice recognition result exceeds (or is above) the preset recognition success threshold and determines that the data attribute of the media stream transmitted over the voice channel is non-voice data when the comparison result is that the voice recognition result is below or equal to the preset recognition success threshold.

The control mode determination unit is adapted to determine a control mode for a communication process of transmitting the media stream with the data attribute of non-voice data in accordance with policy information preconfigured for different communication processes, and the determined control mode may be an interruption control mode in which a current communication process is interrupted, a disturbance control mode in which a current communication process is disturbed, for example, by adding trashy data such as noise or the like in the currently transmitted media stream to make it difficult for a receiver to recover the original initial data, or an alarm control mode, etc.

The control unit is adapted to control the communication process of transmitting non-voice data according to the control mode determined by the control mode determination unit specifically as follows.

The first control sub-unit is adapted to instruct voice switches which both communication parties are subordinate to control the communication process of transmitting non-voice data. Processing details thereof are analogous to those in the related descriptions of the first embodiment and will not be repeated here.

The second control sub-unit is adapted to perform corresponding control by itself on the communication process of transmitting non-voice data according to the control mode determined by the control mode determination unit. For example, an alarm signal is generated for the current communication process of transmitting non-voice data over the voice channel to notify a network administrator. The rest details are substantially analogous to those of the second embodiment and will not be repeated here.

The fourth embodiment of the invention further provides another data attribute analysis device including an obtaining unit and a detection unit, and the detection unit can include a data attribute determination sub-unit. For further control on a current communication, the data attribute analysis device can further include a control mode determination unit and a control unit. The control unit can further include a first control sub-unit and/or a second control sub-unit.

Particularly, the control mode determination unit, the control unit and the first control sub-unit and/or the second control sub-unit in the control unit have functions analogous to the respective units in the third embodiment and will not be described here. Functions of only the obtaining unit and the detection unit will be described below.

The obtaining unit is adapted to obtain a recognition result of a media stream transmitted over a voice channel, and it can obtain a human voice detection result from a recognition server.

The detection unit is adapted to determine the data attribute of the media stream transmitted over the voice channel in accordance with the recognition result obtained by the obtaining unit. Particularly, the detection unit includes:

A data attribute determination sub-unit determines whether the data attribute of the media stream transmitted over the voice channel is voice or non-voice data in accordance with the human voice detection result obtained by the obtaining unit.

As apparent from the specific implementation solutions provided according to the embodiments of the invention, they can detect whether the media stream transmitted over the voice channel is non-voice data by using the method for determining the data attribute of the media stream transmitted over the voice channel in accordance with the recognition result, so that particularly the non-voice data can be prevented from being transmitted to the outside over the voice channel, thereby improving the security of important data information.

Evidently, those skilled in the art can modify and vary the invention without departing from scope of the invention. Accordingly, the invention is intended to encompass these modifications and modifications provided that they come into the scope of the claims appended to the invention.

## Claims

1. A data attribute detection method, comprising:
obtaining (105a-105b) a media stream transmitted over a voice channel established through a voice switch;
recognizing (106a) the obtained media stream to obtain a recognition result;
and
determining (106b) whether the recognition result is above a preset recognition success threshold; if the recognition result is above a preset recognition success threshold, determining that the data attribute of the media stream transmitted over the voice channel is voice data; otherwise, determining that the data attribute of the media stream transmitted over the voice channel is non-voice data;
if the data attribute of the media stream is non-voice data, determining(107) a corresponding control mode for a communication process of transmitting the media stream with the data attribute of non-voice data in accordance with preconfigured policy information;
if the determined control mode is a disturbance control mode, instructing the voice switch to perform a disturbance control on the current communication process according to the disturbance control mode, so that the voice switch transmits a corresponding instruction to a media server to instruct the media server to add trashy data, such as noise, in the currently transmitted media stream and transmit the media stream with the trashy data to a receiver, wherein all media streams exchanged between both communication parties are forwarded via the media server.

2. The method according to claim 1, wherein when the recognition result is a human voice detection result, the data attribute of the media stream transmitted over the voice channel is determined in accordance with the human voice detection result.

3. The method according to claim 2, wherein if the human voice detection result is determined by a spectrum profile, the determining of the data attribute of the media stream transmitted over the voice channel in accordance with the human voice detection result comprises:
comparing a spectrum profile of the media stream with a preset human voice spectrum profile; if a comparison error is within a preset range, determining the data attribute of the media stream as voice data; otherwise determining the data attribute of the media stream as non-voice data.

4. The method according to any one of claims 1 to 3, further comprising:
if the determined control mode is an interruption control mode, instructing the voice switch to perform an interruption control on the current communication process according to the interruption control mode, so that the voice switch interrupts the media communication connection between both communication parties according to the instruction.

5. A data attribute detection system, comprising: a recognition server, a data attribute analysis device and a voice switch;
the recognition server is adapted to obtain a media stream transmitted over a voice channel established through the voice switch, to recognize the obtained media stream to obtain a recognition result which is then transmitted to a data attribute analysis device; and
the data attribute analysis device is adapted to determine whether the recognition result is above a preset recognition success threshold; if the recognition result is above a preset recognition success threshold, determining that the data attribute of the media stream transmitted over the voice channel is voice data; otherwise, determining that the data attribute of the media stream transmitted over the voice channel is non-voice data; if the data attribute of the media stream is non-voice data, is further adapted to determine a corresponding control mode for a communication process of transmitting the media stream with the data attribute of non-voice data in accordance with preconfigured policy information, and if the determined control mode is a disturbance control mode, is further adapted to instruct the voice switch to perform a disturbance control on the current communication process according to the disturbance control mode;
the voice switch is adapted to establish the voice channel, and is further
adapted to transmit a corresponding instruction to a media server according to instruction of the data attribute analysis device to instruct the media server to add
data, such as noise, in the currently transmitted media stream and transmit the media stream with the trashy data to a receiver, wherein all media streams exchanged between both communication parties are forwarded via the media server.

6. The system according to claim 5, further comprising:
a media server adapted to obtain a certain number of media streams transmitted over the voice channel and to provide the recognition server with the media streams;
wherein the recognition server is specifically adapted to receive the media streams from the media server and recognize the media streams to obtain the recognition result.

7. The system according to claim 6, wherein the voice switch is adapted to establish the voice channel, wherein
the voice switch is further adapted to establish a connection channel between both communication parties and the media server.

8. The system according to any one of claims 5 to 7, wherein, if the determined control mode is an interruption control mode, the data attribute analysis device is further adapted to instruct the voice switch to perform an interruption control on the current communication process;
the voice switch is further adapted to interrupt media communication connection between both communication parties according to instruction of the data attribute analysis device.

9. A data attribute analysis device, comprising:
an obtaining unit adapted to obtain a recognition result of a media stream transmitted over a voice channel established through a voice switch; and
a detection unit comprising a comparison sub-unit and a detection sub-unit, wherein, the comparison sub-unit is adapted to compare the recognition result with a preset recognition success threshold; and the detection sub-unit adapted to determine that the data attribute of the media stream transmitted over the voice channel is voice data when a comparison result is that the recognition result is above the preset recognition success threshold, or to determine that the data attribute of the media stream currently transmitted over the voice channel is non-voice data when a comparison result is that the recognition result is below or equal to the preset recognition success threshold;
a control mode determination unit adapted to determine a corresponding control mode for a communication process of transmitting the media stream with the data attribute of non-voice data in accordance with preconfigured policy information if the data attribute of the media stream is non-voice data; and, if the determined control mode is a disturbance control mode, instruct the voice switch to perform a disturbance control on the current communication process according to the disturbance control mode, so that the voice switch transmits a corresponding instruction to a media server to instruct the media server to add trashy data, such as noise, in the currently transmitted media stream and transmit the media stream with the trashy data to a receiver, wherein the media server is used to forward media streams exchanged between both communication parties.

10. The data attribute analysis device according to claim 9, wherein, if the determined control mode is an interruption control mode, the control mode determination unit is further adapted to instruct the voice switch to perform an interruption control on the current communication process, so that the voice switch interrupts media communication connection between both communication parties according to instruction of the control mode determination unit.

11. The data attribute analysis device according to claim 9, wherein the detection unit comprises:
a data attribute determination sub-unit adapted to determine the data attribute of the media stream transmitted over the voice channel in accordance with a human
voice detection result when the recognition result is the human voice detection result.

12. The data attribute analysis device according to any one of claims 9 to 11, wherein the data attribute analysis device is integrated into a voice switch.

## Patentansprüche

1. Datenattribut-Detektionsverfahren, umfassend:
Erhalten (105a-105b) eines Medienstroms, der über einen durch eine Sprachvermittlung hergestellten Sprachkanal übertragen wird;
Erkennen (106a) des erhaltenen Medienstroms, um ein Erkennungsergebnis zu erhalten; und
Bestimmen (106b), ob das Erkennungsergebnis über einer voreingestellten Erkennungserfolgsschwelle liegt; wenn das Erkennungsergebnis über einer voreingestellten Erkennungserfolgsschwelle liegt, Bestimmen, dass das Datenattribut des über den Sprachkanal übertragenen Medienstroms Sprachdaten ist; andernfalls Bestimmen, dass das Datenattribut des über den Sprachkanal übertragenen Medienstroms Nicht-Sprachdaten ist;
wenn das Datenattribut des Medienstroms Nicht-Sprachdaten ist, Bestimmen (107) eines entsprechenden Steuermodus für einen Kommunikationsprozess zum Übertragen des Medienstroms mit dem Datenattribut von Nicht-Sprachdaten gemäß vorkonfigurierten Richtlinieninformationen;
wenn der bestimmte Steuermodus ein Störungssteuermodus ist, Anweisen der Sprachvermittlung, gemäß dem Störungssteuermodus eine Störungssteuerung an dem aktuellen Kommunikationsprozess auszuführen, so dass die Sprachvermittlung eine entsprechende Anweisung zu einem Medienserver überträgt, um den Medienserver anzuweisen, Schund-Daten, wie etwa Rauschen, in dem aktuell übertragenen Medienstrom hinzuzufügen und den Medienstrom mit den Schund-Daten zu einem Empfänger zu übertragen, wobei alle zwischen beiden Kommunikationsteilnehmern ausgetauschten Medienströme über den Medienserver weitergeleitet werden.

2. Verfahren nach Anspruch 1, wobei, wenn das Erkennungsergebnis ein Menschliche-Stimme-Detektionsergebnis ist, das Datenattribut des über den Sprachkanal übertragenen Medienstroms gemäß dem Menschliche-Stimme-Detektionsergebnis bestimmt wird.

3. Verfahren nach Anspruch 2, wobei, wenn das Menschliche-Stimme-Detektionsergebnis durch ein Spektrumprofil bestimmt wird, das Bestimmen des Datenattributs des über den Sprachkanal übertragenen Medienstroms gemäß dem Menschliche-Stimme-Detektionsergebnis Folgendes umfasst:
Vergleichen eines Spektrumprofils des Medienstroms mit einem voreingestellten Menschliche-Stimme-Spektrumprofil; wenn ein Vergleichsfehler innerhalb eines voreingestellten Bereichs liegt, Bestimmen des Datenattributs des Medienstroms als Sprachdaten; andernfalls Bestimmen des Datenattributs des Medienstroms als Nicht-Sprachdaten.

4. Verfahren nach einem der Ansprüche 1 bis 3, ferner umfassend:
wenn der bestimmte Steuermodus ein Unterbrechungssteuermodus ist, Anweisen der Sprachvermittlung, gemäß dem Unterbrechungssteuermodus eine Unterbrechungssteuerung an dem aktuellen Kommunikationsprozess auszuführen, so dass die Sprachvermittlung die Medienkommunikationsverbindung zwischen beiden Kommunikationsteilnehmern gemäß der Anweisung unterbricht.

5. Datenattribut-Detektionssystem, umfassend: einen Erkennungsserver, eine Datenattribut-Analyseeinrichtung und eine Sprachvermittlung;
wobei der Erkennungsserver ausgelegt ist zum Erhalten eines Medienstroms, der über einen durch die Sprachvermittlung hergestellten Sprachkanal übertragen wird, um den erhaltenen Medienstrom zu erkennen, um ein Erkennungsergebnis zu erhalten, das dann zu einer Datenattribut-Analyseeinrichtung übertragen wird; und die Datenattribut-Analyseeinrichtung ausgelegt ist zum Bestimmen, ob das Erkennungsergebnis über einer voreingestellten Erkennungserfolgsschwelle liegt; wenn das Erkennungsergebnis über einer voreingestellten Erkennungserfolgsschwelle liegt, Bestimmen, dass das Datenattribut des über den Sprachkanal übertragenen Medienstroms Sprachdaten ist; andernfalls Bestimmen, dass das Datenattribut des über den Sprachkanal übertragenen Medienstroms Nicht-Sprachdaten ist; wenn das Datenattribut des Medienstroms Nicht-Sprachdaten ist, sie ferner ausgelegt ist zum Bestimmen eines entsprechenden Steuermodus für einen Kommunikationsprozess zum Übertragen des Medienstroms mit dem Datenattribut von Nicht-Sprachdaten gemäß vorkonfigurierten Richtlinieninformationen; und wenn der bestimmte Steuermodus ein Störungssteuermodus ist, sie ferner ausgelegt ist, zum Anweisen der Sprachvermittlung, gemäß dem Störungssteuermodus eine Störungssteuerung an dem aktuellen Kommunikationsprozess auszuführen,
wobei die Sprachvermittlung ausgelegt ist zum Herstellen des Sprachkanals und ferner ausgelegt ist zum Übertragen einer entsprechenden Anweisung zu einem Medienserver gemäß der Anweisung der Datenattribut-Analyseeinrichtung, um den Medienserver anzuweisen, Schund-Daten, wie etwa Rauschen, in dem aktuell übertragenen Medienstrom hinzuzufügen und den Medienstrom mit den Schund-Daten zu einem Empfänger zu übertragen, wobei alle zwischen beiden Kommunikationsteilnehmern ausgetauschten Medienströme über den Medienserver weitergeleitet werden.

6. System nach Anspruch 5, ferner umfassend:
einen Medienserver, ausgelegt zum Erhalten einer bestimmten Anzahl von über den Sprachkanal übertragenen Medienströmen und zum Bereitstellen der Medienströme für den Erkennungsserver;
wobei der Erkennungsserver spezifisch ausgelegt ist zum Empfangen der Medienströme von dem Medienserver und Erkennen der Medienströme, um das Erkennungsergebnis zu erhalten.

7. System nach Anspruch 6, wobei die Sprachvermittlung ausgelegt ist zum Herstellen des Sprachkanals;
wobei die Sprachvermittlung ausgelegt ist zum Herstellen eines Verbindungskanals zwischen beiden Kommunikationsteilnehmern und dem Medienserver.

8. System nach einem der Ansprüche 5 bis 7, wobei, wenn der bestimmte Steuermodus ein Unterbrechungssteuermodus ist, die Datenattribut-Analyseeinrichtung ferner ausgelegt ist zum Anweisen der Sprachvermittlung, eine Unterbrechungssteuerung an dem aktuellen Kommunikationsprozess auszuführen; und
die Sprachvermittlung ferner ausgelegt ist zum Unterbrechen der Medienkommunikationsverbindung zwischen beiden Kommunikationsteilnehmern gemäß der Anweisung der Datenattribut-Analyseeinrichtung.

9. Datenattribut-Analyseeinrichtung, umfassend:
eine Erhalteeinheit, ausgelegt zum Erhalten eines Erkennungsergebnisses eines Medienstroms, der über einen durch eine Sprachvermittlung hergestellten Sprachkanal übertragen wird; und
eine Detektionseinheit, die eine Vergleichssubeinheit und eine Detektionssubeinheit umfasst, wobei die Vergleichssubeinheit ausgelegt ist zum Vergleichen des Erkennungsergebnisses mit einer voreingestellten Erkennungserfolgsschwelle; und
die Detektionssubeinheit ausgelegt ist zum Bestimmen, dass das Datenattribut des über den Sprachkanal übertragenen Medienstroms Sprachdaten ist, wenn ein Vergleichsergebnis darin besteht, dass das Erkennungsergebnis über der voreingestellten Erkennungserfolgsschwelle liegt, oder zum Bestimmen, dass das Datenattribut des gerade über den Sprachkanal übertragenen Medienstroms Nicht-Sprachdaten ist, wenn ein Vergleichsergebnis darin besteht, dass das Erkennungsergebnis unter oder gleich der voreingestellten Erkennungserfolgsschwelle ist;
eine Steuermodus-Bestimmungseinheit, ausgelegt zum Bestimmen eines entsprechenden Steuermodus für einen Kommunikationsprozess zum Übertragen des Medienstroms mit dem Datenattribut von Nicht-Sprachdaten gemäß vorkonfigurierten Richtlinieninformationen, wenn das Datenattribut des Medienstroms Nicht-Sprachdaten ist; und, wenn der bestimmte Steuermodus ein Störungssteuermodus ist, Anweisen der Sprachvermittlung, eine Störungssteuerung gemäß dem Störungssteuermodus an dem aktuellen Kommunikationsprozess auszuführen, so dass die Sprachvermittlung eine entsprechende Anweisung zu einem Medienserver überträgt, um den Medienserver anzuweisen, Schund-Daten, wie etwa Rauschen, in dem aktuell übertragenen Medienstrom hinzuzufügen und den Medienstrom mit den Schund-Daten zu einem Empfänger zu übertragen, wobei der Medienserver zum Weiterleiten von zwischen beiden Kommunikationsteilnehmern ausgetauschten Medienströmen verwendet wird.

10. Datenattribut-Analyseeinrichtung nach Anspruch 9, wobei, wenn der bestimmte Steuermodus ein Unterbrechungs-Steuermodus ist, die Steuermodus-Bestimmungseinheit ferner ausgelegt ist zum Anweisen der Sprachvermittlung, eine Unterbrechungssteuerung an dem aktuellen Kommunikationsprozess auszuführen, so dass die Sprachvermittlung die Medienkommunikationsverbindung zwischen beiden Kommunikationsteilnehmern gemäß der Anweisung der Steuermodus-Bestimmungseinheit unterbricht.

11. Datenattribut-Analyseeinrichtung nach Anspruch 9, wobei die Detektionseinheit Folgendes umfasst:
eine Datenattribut-Bestimmungssubeinheit, ausgelegt zum Bestimmen des Datenattributs des über den Sprachkanal übertragenen Medienstroms gemäß einem Menschliche-Stimme-Detektionsergebnis, wenn das Erkennungsergebnis das Menschliche-Stimme-Detektionsergebnis ist.

12. Datenattribut-Analyseeinrichtung nach einem der Ansprüche 9 bis 11, wobei die Datenattribut-Analyseeinrichtung in eine Sprachvermittlung integriert ist.

## Revendications

1. Procédé de détection d'attribut de données, comprenant les étapes suivantes :
obtenir (105a-105b) un flux de média transmis sur un canal vocal établi par l'intermédiaire d'un commutateur vocal ;
reconnaître (106a) le flux de média obtenu pour obtenir un résultat de reconnaissance ; et
déterminer (106b) si le résultat de reconnaissance est supérieur à un seuil de succès de reconnaissance prédéfini ; si le résultat de reconnaissance se situe au-dessus d'un seuil de succès de reconnaissance prédéfini, déterminer que l'attribut de données du flux de média transmis sur le canal vocal correspond à des données vocales ; sinon,
déterminer que l'attribut de données du flux de média transmis sur le canal vocal correspond à des données non vocales ;
si l'attribut de données du flux de média correspond à des données non vocales,
déterminer (107) un mode de contrôle correspondant pour un processus de communication de transmission du flux de média avec l'attribut de données de données non vocales conformément à des informations de politique préconfigurées ;
si le mode de contrôle déterminé est un mode de contrôle des perturbations, donner pour instruction au commutateur vocal d'effectuer un contrôle des perturbations sur le processus de communication en cours conformément au mode de contrôle des perturbations, de manière à ce que le commutateur vocal transmette une instruction correspondante à un serveur de média pour donner pour instruction au serveur de média d'ajouter des données inutiles, telles que du bruit, dans le flux de média en cours de transmission et transmettre le flux de média avec les données inutiles à un récepteur, où tous les flux de média échangés entre les deux parties en communication sont retransmis par l'intermédiaire du serveur de média.

2. Procédé selon la revendication 1, dans lequel, lorsque le résultat de reconnaissance est un résultat de détection de voix humaine, l'attribut de données du flux de média transmis sur le canal vocal est déterminé conformément au résultat de détection de voix humaine.

3. Procédé selon la revendication 2, dans lequel, si le résultat de détection de voix humaine est déterminé par un profil spectral, la détermination de l'attribut de données du flux de média transmis sur le canal vocal conformément au résultat de détection de voix humaine comprend les étapes suivantes :
comparer un profil spectral du flux de média à un profil spectral de voix humaine prédéfini ; si une erreur de comparaison se situe dans une plage prédéfinie, déterminer l'attribut de données du flux de média comme correspondant à des données vocales ; sinon, déterminer l'attribut de données du flux de média comme correspondant à des données non vocales.

4. Procédé selon l'une quelconque des revendications 1 à 3, comprenant en outre l'étape suivante :
si le mode de contrôle déterminé est un mode de contrôle d'interruption, donner pour instruction au commutateur vocal d'effectuer un contrôle d'interruption sur le processus de communication en cours conformément au mode de contrôle d'interruption, de manière à ce que le commutateur vocal interrompe la connexion de communication multimédia entre les deux parties en communication conformément à l'instruction.

5. Système de détection d'attribut de données, comprenant : un serveur de reconnaissance, un dispositif d'analyse d'attribut de données et un commutateur vocal ;
le serveur de reconnaissance est conçu pour obtenir un flux de média transmis sur un canal vocal établi par l'intermédiaire du commutateur vocal, pour reconnaître le flux de média obtenu pour obtenir un résultat de reconnaissance qui est ensuite transmis à un dispositif d'analyse d'attribut de données ; et
le dispositif d'analyse d'attribut de données est conçu pour déterminer si le résultat de reconnaissance est supérieur à un seuil de succès de reconnaissance prédéfini ; si le résultat de reconnaissance se situe au-dessus d'un seuil de succès de reconnaissance prédéfini, déterminer que l'attribut de données du flux de média transmis sur le canal vocal correspond à des données vocales ; sinon, déterminer que l'attribut de données du flux de média transmis sur le canal vocal correspond à des données non vocales ; si l'attribut de données du flux de média correspond à des données non vocales, il est en outre conçu pour déterminer un mode de contrôle correspondant pour un processus de communication de transmission du flux de média avec l'attribut de données de données non vocales conformément à des informations de politique préconfigurées, et si le mode de contrôle déterminé est un mode de contrôle des perturbations, il est en outre conçu pour donner pour instruction au commutateur vocal d'effectuer un contrôle des perturbations sur le processus de communication en cours conformément au mode de contrôle des perturbations ;
le commutateur vocal est conçu pour établir le canal vocal, et est en outre conçu pour transmettre une instruction correspondante à un serveur de média conformément à une instruction du dispositif d'analyse d'attribut de données pour donner pour instruction au serveur de média d'ajouter des données inutiles, telles que du bruit, dans le flux de média en cours de transmission et transmettre le flux de média avec les données inutiles à un récepteur, où tous les flux de média échangés entre les deux parties en communication sont retransmis par l'intermédiaire du serveur de média.

6. Système selon la revendication 5, comprenant en outre :
un serveur de média conçu pour obtenir un certain nombre de flux de média transmis sur le canal vocal et pour fournir au serveur de reconnaissance les flux de média ;
où le serveur de reconnaissance est spécifiquement conçu pour recevoir les flux de média du serveur de média et pour reconnaître les flux de média pour obtenir le résultat de reconnaissance.

7. Système selon la revendication 6, dans lequel le commutateur vocal est conçu pour établir le canal vocal ;
où le commutateur vocal est conçu pour établir un canal de connexion entre les deux parties en communication et le serveur de média.

8. Système selon l'une quelconque des revendications 5 à 7, dans lequel, si le mode de contrôle déterminé est un mode de contrôle d'interruption, le dispositif d'analyse d'attribut de données est en outre conçu pour donner pour instruction au commutateur vocal d'effectuer un contrôle d'interruption sur le processus de communication en cours ;
le commutateur vocal est en outre conçu pour interrompre la connexion de communication multimédia entre les deux parties en communication conformément à une instruction du dispositif d'analyse d'attribut de données.

9. Dispositif d'analyse d'attribut de données, comprenant :
une unité d'obtention conçue pour obtenir un résultat de reconnaissance d'un flux de média transmis sur un canal vocal établi par l'intermédiaire d'un commutateur vocal ;
et
une unité de détection comprenant une sous-unité de comparaison et une sous-unité de détection, où la sous-unité de comparaison est conçue pour comparer le résultat de reconnaissance à un seuil de succès de reconnaissance prédéfini ; et la sous-unité de détection est conçue pour déterminer que l'attribut de données du flux de média transmis sur le canal vocal correspond à des données vocales lorsqu'un résultat de comparaison indique que le résultat de reconnaissance se situe au-dessus du seuil de succès de reconnaissance prédéfini, ou pour déterminer que l'attribut de données du flux de média actuellement transmis sur le canal vocal correspond à des données non vocales lorsqu'un résultat de comparaison indique que le résultat de reconnaissance est inférieur ou égal au seuil de succès de reconnaissance prédéfini ;
une unité de détermination de mode de contrôle conçue pour déterminer un mode de contrôle correspondant pour un processus de communication de transmission du flux de média avec l'attribut de données de données non vocales conformément à des informations de politique préconfigurées si l'attribut de données du flux de média correspond à des données non vocales ; et, si le mode de contrôle déterminé est un mode de contrôle des perturbations, donner pour instruction au commutateur vocal d'effectuer un contrôle des perturbations sur le processus de communication en cours conformément au mode de contrôle des perturbations, de manière à ce que le commutateur vocal transmette une instruction correspondante à un serveur de média pour donner pour instruction au serveur de média d'ajouter des données inutiles,
telles que du bruit, dans le flux de média en cours de transmission et transmettre le flux de média avec les données inutiles à un récepteur, où le serveur de média est utilisé pour retransmettre des flux de média échangés entre les deux parties en communication.

10. Dispositif d'analyse d'attribut de données selon la revendication 9, dans lequel, si le mode de contrôle déterminé est un mode de contrôle d'interruption, l'unité de détermination de mode de contrôle est en outre conçue pour donner pour instruction au commutateur vocal d'effectuer un contrôle d'interruption sur le processus de communication en cours, de manière à ce que le commutateur vocal interrompe la connexion de communication multimédia entre les deux parties en communication conformément à l'instruction de l'unité de détermination de mode de contrôle.

11. Dispositif d'analyse d'attribut de données selon la revendication 9, dans lequel l'unité de détection comprend :
une sous-unité de détermination d'attribut de données conçue pour déterminer l'attribut de données du flux de média transmis sur le canal vocal conformément à un résultat de détection de voix humaine lorsque le résultat de reconnaissance est le résultat de détection de voix humaine.

12. Dispositif d'analyse d'attribut de données selon l'une quelconque des revendications 9 à 11, dans lequel le dispositif d'analyse d'attribut de données est intégré dans un commutateur vocal.
